# EUROPEAN PATENT APPLICATION

(11) **EP 4 660 357 A1**
(43) Date of publication of application: **10.12.2025**
(21) Application number: 24750262.8
(22) Date of filing: 30.01.2024
(51) Int. Cl.: D01F 6/92, A41D 31/00, D03D 15/20, D03D 15/283, D03D 15/547, D04B 1/16, G06K 19/02, G06K 19/06

(54) **FIBER PRODUCT, FUNCTIONAL THREAD, AND SENSING METHOD**

(30) Priority: 31.01.2023 JP 2023012962
(71) Applicant: Yamamoto Chemicals, Inc., Yao-shi, Osaka 581-0034 (JP)
(72) Inventor: AMAKO, Takamichi, Yao-shi, Osaka 581-0034 (JP); KOBAYASHI, Seiichi, Yao-shi, Osaka 581-0034 (JP)
(74) Representative: Hoffmann Eitle
(86) International application number: PCT/JP2024/002783
(87) International publication number: WO 2024/162313

(57) **Abstract**

A textile product including an information unit (90) that is provided in a predetermined shape on a textile fabric provided with a yarn (normal yarn(97)) that does not absorb light having a specific wavelength λ other than a visible light region, using a functional yarn (invisible yarn (96)) that absorbs light having the specific wavelength λ as a peak wavelength.

## Description

### TECHNICAL FIELD

The present invention relates to a textile product, a functional yarn, and a sensing method.

### BACKGROUND ART

A technique of printing characters or the like with an invisible ink consisting of a near-infrared absorbing material on a medium such as paper for the purpose of ensuring security or embedding additional data, irradiating the printed matter with infrared rays, and reading the characters or the like printed with the near-infrared absorbing material is known.

As such a technique, for example, a technique of printing a visible two-dimensional code and a transparent invisible two-dimensional code such that at least a part thereof overlaps is proposed. (see, for example, Patent Document 1). More specifically, the information of the visible two-dimensional code can be decrypted with the key of the transparent two-dimensional code, and the authenticity of the information printed matter of the visible two-dimensional code can be confirmed by using the key.

### RELATED DOCUMENT

### PATENT DOCUMENT

Patent Document 1: Japanese Unexamined Patent Publication No. 2018-89840

### SUMMARY OF THE INVENTION

### TECHNICAL PROBLEM

In recent years, there has been a demand for a technique of providing information (characters, codes, and the like) invisible to a person on a medium in various fields. In the field of textile products such as clothing, in a case where information is printed on a fabric with an invisible ink, there is a possibility that the ink may fall off due to washing or the like, and the information may be lost.

The present invention has been made in view of such circumstances, and an object of the present invention is to reduce a possibility that invisible information is lost in a case where the invisible information is provided in a textile product.

### SOLUTION TO PROBLEM

According to the present invention, the following techniques are provided.
1. A textile product including an information unit that is provided in a predetermined shape on a textile fabric provided with a yarn that does not absorb light having a specific wavelength λ other than a visible light region, using a functional yarn that absorbs light having the specific wavelength λ as a peak wavelength.
   The fiber cross section of the functional yarn is not limited to a circular shape, a special shape, a hollow shape, or the like.
2. The textile product according to 1, in which the specific wavelength λ is in a wavelength range of infrared light.
3. The textile product according to 1, in which the specific wavelength λ is in a range of 700 to 1300 nm.
4. The textile product according to any one of 1. to 3., in which a light absorbance at the specific wavelength λ is equal to or more than 50%.
5. The textile product according to 4., in which a light absorbance in a wavelength range of a wavelength width of 300 nm centered on the specific wavelength λ is equal to or more than 50%.
6. The textile product according to any one of 1. to 5., in which the functional yarn is formed by incorporating a light absorbing material that absorbs the specific wavelength λ into a raw yarn.
7. The textile product according to 6., in which the raw yarn is a resin yarn having a resin as a main raw material.
8. The textile product according to 7., in which the main raw material of the resin yarn is polyethylene terephthalate, nylon, acrylic, or polycarbonate.
9. The textile product according to any one of 1. to 8., in which the functional yarn is a monofilament yarn or a multifilament yarn obtained by twisting a plurality of fibers together.
10. The textile product according to any one of 1. to 9., in which the information unit is formed by embroidering the functional yarn on the textile fabric.
11. The textile product according to any one of 1. to 9., in which the information unit is formed by weaving or knitting the functional yarn and the yarn that does not absorb light having the specific wavelength λ together.
12. The textile product according to any one of 1. to 11., in which in the information unit, the functional yarn and the yarn that does not absorb light having the specific wavelength λ have the same color or similar colors in a visible light region.
13. The textile product according to any one of 1. to 12., in which in the information unit, a cover layer that transmits light having the specific wavelength λ is provided on an upper surface of the functional yarn.
14. The textile product according to 13., in which the cover layer is formed of a fiber member.
15. The textile product according to 13., in which the cover layer is formed of a film member.
16. A functional yarn used for the textile product according to any one of 1. to 15..
17. A sensing method including irradiating the textile product according to any one of 1. to 15. with light (A) having a specific wavelength λ, and sensing an information unit formed in a predetermined shape using a yarn that absorbs the light having the specific wavelength λ in the textile product.

### ADVANTAGEOUS EFFECTS OF INVENTION

According to the present invention, it is possible to provide a technique for reducing the possibility that invisible information is lost in a case where the invisible information is provided in a textile product.

### BRIEF DESCRIPTION OF THE DRAWINGS

[FIG. 1] A block diagram showing a schematic configuration of a product management system according to an embodiment.
[FIG. 2] A block diagram showing a schematic configuration of a reading device in the embodiment.
[FIG. 3] A block diagram showing a schematic configuration of a management device in the embodiment.
[FIG. 4] A diagram showing a data example of a basic information recording unit in the embodiment.
[FIG. 5] A diagram showing a data example of a manufacturing information recording unit in the embodiment.
[FIG. 6 ] A diagram showing a data example of a distribution information recording unit in the embodiment.
[FIG. 7] A diagram showing an information unit in the embodiment in an enlarged manner.
[FIG. 8] A diagram schematically showing a cross-sectional structure of an information unit in the embodiment.
[FIG. 9] A flowchart showing an operation example of the product management system in the embodiment.
[FIG. 10] A spectral distribution of light absorption characteristics of an infrared absorbing coloring agent (DY1205) in Examples.
[FIG. 11] A diagram showing an example of a photo of a sample in which an information unit (code image) is formed with an invisible yarn in a normal environment and a photo scanned with an infrared camera or an infrared sensor in Examples.
[FIG. 12] A diagram showing an example of a photo of a sample in which the information unit (authenticity determination image) is formed with an invisible yarn in a normal environment and a photo scanned with an infrared camera or an infrared sensor in the example.
[FIG. 13] A block diagram showing a computer that implements the reading device and the management device in the embodiment.

### DESCRIPTION OF EMBODIMENTS

The outline of the present embodiment is as follows.
(1) An information unit is provided in a textile product with a yarn (hereinafter, referred to as an "invisible yarn") containing an invisible coloring agent. The invisible coloring agent is a coloring agent having a low absorbance of visible light and a high absorbance of light (for example, near-infrared rays or ultraviolet rays) having a predetermined wavelength other than visible light. Such an invisible coloring agent is contained. In a general visible light environment, the invisible yarn does not allow the color of the invisible coloring agent to be visually recognized (or hardly allows the color of the invisible coloring agent to be visually recognized). In other words, the invisible yarn is a yarn having a relatively low light absorbance for visible light and a relatively high light absorbance for light having a predetermined wavelength other than visible light. That is, the invisible yarn reflects or transmits visible light and absorbs light having a predetermined wavelength other than visible light. The reading device (infrared sensor, infrared camera) reads the information unit provided with the invisible yarn and the normal yarn (yarn containing no invisible coloring agent). The reflection or transmission does not mean 100% reflection (reflectivity) or transmission (transmittance), and the invisible yarn and the normal yarn may be set to have a reflectivity or transmittance that can be recognized by the reading device. Hereinafter, a general visible light environment will be described as a "normal environment".
(2) In the present embodiment, the invisible yarn is obtained by kneading a near-infrared absorbing coloring agent or an ultraviolet absorbing coloring agent (ultraviolet fluorescent coloring agent) as an invisible coloring agent into a raw yarn of a resin (PET or the like). In the following, an example in which a near-infrared absorbing coloring agent is used will be described.

In this manner, by using a yarn in which a near-infrared absorbing coloring agent or the like is kneaded into a raw yarn of a resin as an invisible yarn, the durability of the information unit formed of the invisible yarn can be improved.

By creating the information unit with an invisible yarn instead of printing, the information unit can be used for a long period of time even in a case where the textile product is washed or the like. In the case of printing, an invisible coloring agent is generally formed on the surface, and the invisible coloring agent is lost by washing, contact, or the like, and thus the function as the information unit is lost in a short period of time. On the other hand, in a case where the invisible yarn is used, since the invisible coloring agent is kneaded into the yarn itself, it is possible to suppress the color from fading due to washing or the like, and it is possible to maintain the function as the information unit for a long period of time.

(3) The information unit is a code image such as a QR code (registered trademark) or a barcode, or an image (verification image) used for authenticity determination and authentication.

Security is strengthened by making the code image or the like invisible.

In addition, by providing the code image as the information unit, various types of management (including traceability management) of the textile product having the information unit are executed, particularly in the distribution stage.

In a case where the information unit is the verification image, the image is compared with the captured image and the authentic image stored in advance in the management device, and it is determined that the image is correct in a case where the image has a similarity equal to or higher than a certain degree.

(4) The information unit is provided as a fabric of a textile product such as clothing or a part of a textile product main body. Alternatively, the information unit is provided in a textile portion of clothing, a bag, shoes, camping goods such as a tent or a tarp, an interior sheet of a car or a cloth product, household and store goods, agricultural materials such as a light shielding sheet or a heat shielding sheet, a product tag, or the like.

In a case where the information unit is provided as a part of the textile product main body, the degree of freedom in the position and size of the information unit is increased without impairing the designability of the textile product (for example, clothing).

In addition, by using the information unit for the authenticity determination, it is possible to prevent the product from being forged. Providing the information unit by printing can be relatively easily performed even after the product is manufactured. However, it is technically and costwise difficult to provide the information unit using the invisible yarn after manufacturing a product such as clothing. In other words, it is easy to determine whether the information unit is provided by printing or by an invisible yarn in the distribution stage.

Hereinafter, the embodiments will be described in detail.

### <Overview of Product Management System 1>

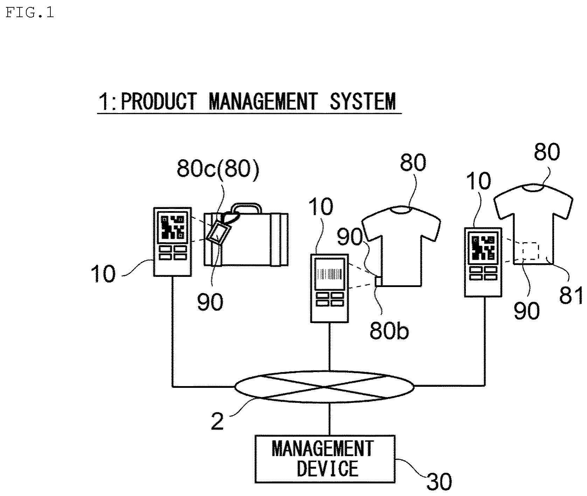

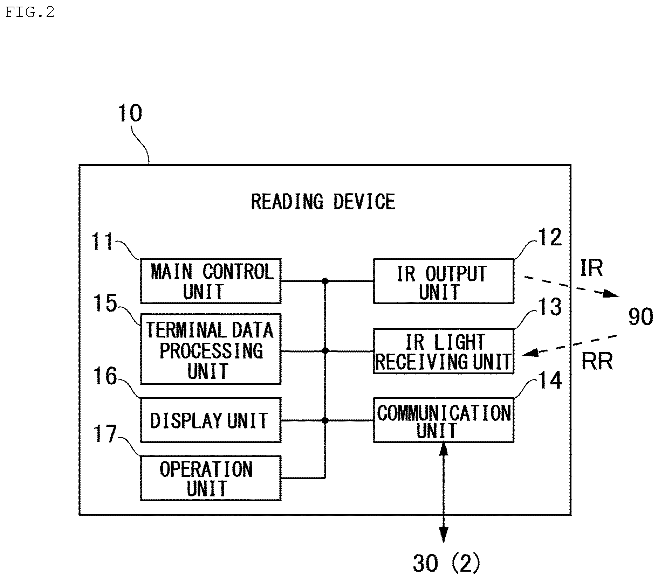

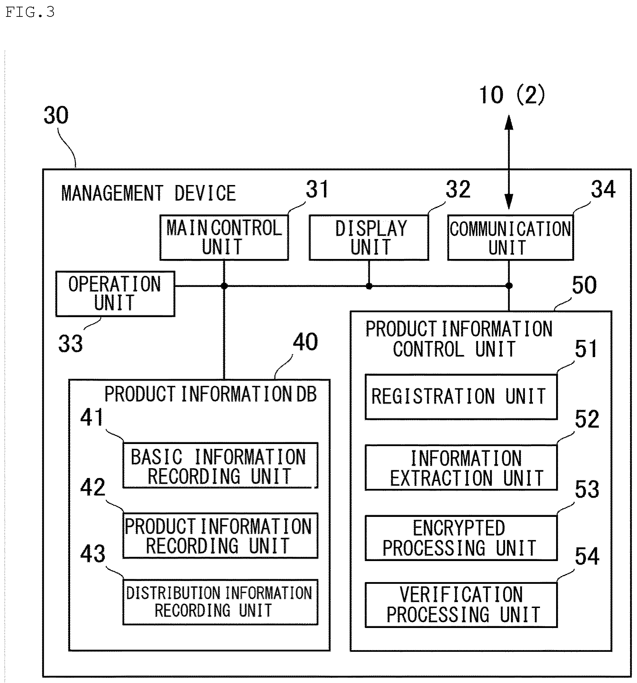

FIG. 1 is a block diagram showing a schematic configuration of a product management system 1 according to the present embodiment. FIG. 2 is a block diagram showing a schematic configuration of the reading device 10. FIG. 3 is a block diagram showing a schematic configuration of the management device 30. The product management system 1 is used by being incorporated into, for example, a core system such as a sales management system, an order placement and order receipt system, or a production and logistics system.

The product management system 1 performs various types of processing related to the product 80 by reading the information unit 90 having the code information provided in the product 80. Specifically, the code image of the information unit 90 is read by using the reading device 10, and various types of data recorded in the product information DB 40 of the management device 30 are accessed based on the code image.

Here, the information unit 90 is provided in the textile product. More specifically, the information unit 90 is configured to be embedded in (1) a part of a product body 81 of a textile product such as clothing or (2) tags 80b and 80c provided separately from a product body of a product 80 such as a bag or a backpack. The tags 80b and 80c are textile products having a textile fabric, and the information unit 90 is embedded in the fabric.

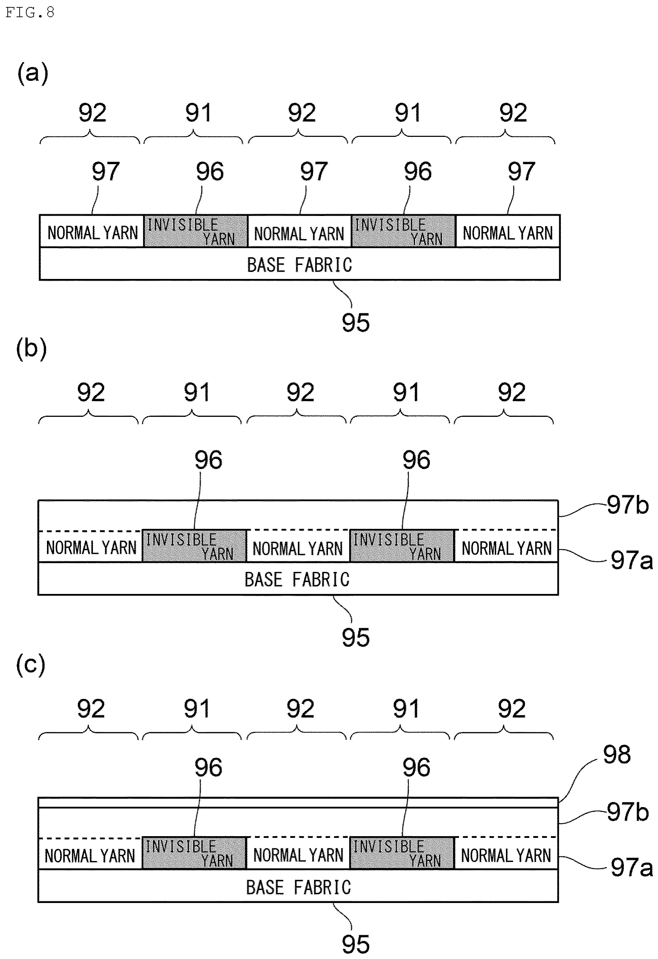

Although details will be described later, as the information unit 90, an image (hereinafter, referred to as a "code image") such as a two-dimensional code or a verification image is formed by an "invisible yarn 96" containing a near-infrared absorbing material and a "normal yarn 97" (see FIG. 8) not containing a near-infrared absorbing material. More specifically, in a case where the code image is read using an infrared camera or a near-infrared sensor (IR irradiation unit 12 and IR light receiving unit 13), an invisible yarn 96 that absorbs near-infrared rays is used for a portion that is recognized as "black", and a normal yarn 97 (see FIG. 8) that does not absorb near-infrared rays and reflects or transmits near-infrared rays is used for a portion that is recognized as "white". Hereinafter, the embodiments will be described in detail.

The product management system 1 includes a reading device 10 and a management device 30. The reading device 10 and the management device 30 are connected via the network 2, but may be directly connected in a wired or wireless manner. A plurality of reading devices 10 connected to the management device 30 may be used. The network 2 may be wired or wireless, may be a dedicated line, or may be a network such as the Internet.

In the present embodiment, although the configuration in which the reading device 10 is configured as a terminal device and the management device 30 is configured as a server device is exemplified, the present invention is not limited to this, and for example, the reading device 10 and the management device 30 may be configured as an integrated device, a configuration in which a part of the functions of the reading device 10 is incorporated into the management device 30 may be adopted, and a configuration in which a part of the functions of the management device 30 is incorporated into the reading device 10 may be adopted. In addition, the reading device 10 and the management device 30 may be configured as dedicated devices, or a configuration may be adopted in which an application or an option device that realizes the function is introduced to a smartphone or a tablet terminal.

### <Reading device 10>

The reading device 10 includes a main control unit 11, an IR irradiation unit 12, an IR light receiving unit 13, a communication unit 14, a terminal data processing unit 15, a display unit 16, and an operation unit 17. In the present embodiment, the reading device 10 is described as a device of a type that reads reflected light, but may be a device that reads transmitted light or a device that reads both reflected light and transmitted light.

The main control unit 11 integrally controls each component of the reading device 10. The communication unit 14 is an interface that communicates with the management device 30 and other external devices. In the present embodiment, the communication unit 14 is connected to the network 2. The operation unit 17 is an interface that receives a user operation, and is composed of, for example, a keyboard, a touch panel, a button, or the like. The operation unit 17 may be configured integrally with the display unit 16.

The IR irradiation unit 12 receives an operation of the user on the operation unit 17 and irradiates the information unit 90 of the product 80 with the near-infrared light. The near-infrared light output by the IR irradiation unit 12 is not particularly limited, but in a case where irradiation with an infrared camera or an infrared sensor (for example, a semiconductor laser) is assumed, the wavelength (peak wavelength) of the near-infrared light is assumed to be, for example, 780 nm, 830 nm, 850 nm, 940 nm, 1100 nm, 1300 nm, and the like, in consideration of introduction cost and marketability. That is, since a semiconductor laser that outputs the above-described wavelengths (780 nm, 830 nm, 850 nm, 940 nm, 1100 nm, and 1300 nm) is widely used as a semiconductor laser that outputs near-infrared light, it is suitable from the viewpoint of cost and technical stability. The wavelength of the near-infrared light to be selected depends on the near-infrared absorbing material used for the invisible yarn 96.

The IR light receiving unit 13 comprises an imaging element that reacts to near-infrared light, receives the near-infrared light emitted from the IR irradiation unit 12 and reflected from the information unit 90, and outputs the near-infrared light to the terminal data processing unit 15.

In this case, the IR light receiving unit 13 recognizes the light receiving level of the light that is reflected from the portion of the near-infrared absorbing material, that is, the absorption part 91, as "LOW", and recognizes the light receiving level of the light that is emitted from the other regions (the reflection part 92 and the margin 93) as "High", and outputs the light receiving levels to the terminal data processing unit 15. The light-receiving characteristics of the IR light receiving unit 13 are set according to the characteristics of the near-infrared light emitted from the IR irradiation unit 12.

The terminal data processing unit 15 transmits the output of the IR light receiving unit 13 to the management device 30 via the communication unit 14 and displays the output on the display unit 16. In a case where the reading device 10 does not need to decode the code image of the information unit 90, the terminal data processing unit 15 converts the output of the IR light receiving unit 13 into a predetermined data format for communication and transmits the converted output to the management device 30. In a case where decoding of the code image is required, the terminal data processing unit 15 performs predetermined decoding processing, converts a processing result into a predetermined data format for communication, and transmits the converted data to the management device 30.

The display unit 16 displays various types of information related to the reading device 10 or the management device 30, or the output from the IR light receiving unit 13. In a case where the output from the IR light receiving unit 13, that is, the code image is displayed on the display unit 16, the code image (for example, the barcode or the two-dimensional code in FIG. 1) in which the light receiving level is set to "LOW" as "black" and "High" as "white" or the processing result thereof is displayed.

In a case where the reading device 10 also has a function of reading the code information that is visible under general visible light, a sensor such as a general imaging apparatus is also provided.

### <Management Device 30>

The management device 30 comprises a main control unit 31, a display unit 32, an operation unit 33, a communication unit 34, a product information DB 40, and a product information control unit 50.

The main control unit 31 integrally controls each component of the management device 30. The display unit 32 displays various types of information related to the reading device 10 and the management device 30. The operation unit 33 is an interface that receives a user operation, and is composed of, for example, a keyboard, a touch panel, a button, or the like. The operation unit 33 may be configured integrally with the display unit 32. The communication unit 34 is an interface that communicates with the reading device 10 or other external devices. In the present embodiment, the communication unit 34 is connected to the network 2.

### <Product Information DB 40>

The product information DB 40 has a basic information recording unit 41, a manufacturing information recording unit 42, and a distribution information recording unit 43. Here, the product information DB 40 is exemplified as being divided into the basic information recording unit 41, the manufacturing information recording unit 42, and the distribution information recording unit 43, but the present invention is not limited to this, and a configuration in which the basic information recording unit 41, the manufacturing information recording unit 42, and the distribution information recording unit 43 are integrated may be adopted, a configuration in which the basic information recording unit 41, the manufacturing information recording unit 42, and the distribution information recording unit 43 are integrated with another configuration may be adopted, or a more detailed configuration may be adopted. In addition, the data recorded in the product information DB 40 may be data in a format in which encryption or the like is not performed, or may be data in an encrypted format such as a blockchain.

The basic information recording unit 41 records basic information of the product 80 in a case where the information unit 90 is directly provided in the product 80, and records basic information of the product 80 to which the tags 80b and 80c are attached in a case where the information unit 90 is provided in the tags 80b and 80c of the product 80.

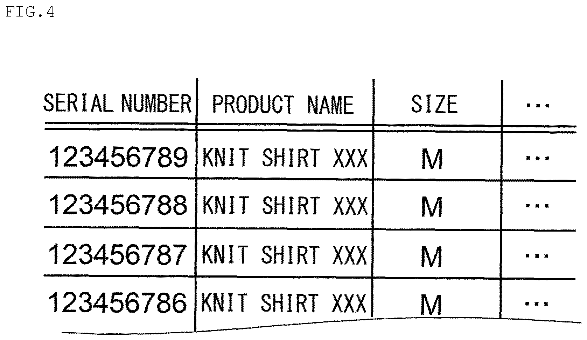

FIG. 4 shows a data example (an example of basic information) recorded in the basic information recording unit 41. The basic information is, for example, a serial number, a product name, a size, and the like. In a case where the code image is decoded, the serial number is extracted, and various types of data recorded in the product information DB 40 are referred to with the serial number as a key.

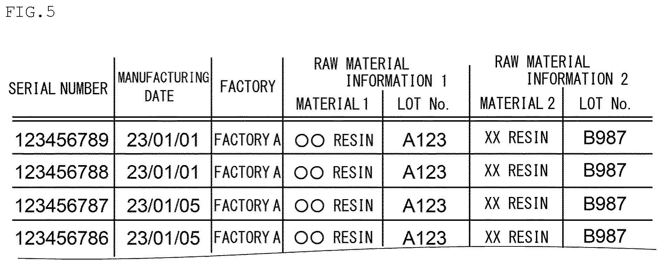

The manufacturing information recording unit 42 records the manufacturing time information. FIG. 5 shows a data example (example of manufacturing time information) recorded in the manufacturing information recording unit 42. The manufacturing time information is, for example, a manufacturing date and time, a manufacturing factory, a lot number of parts or raw materials actually used for manufacturing the product 80, and the like, and these are recorded in association with the serial number of the product 80.

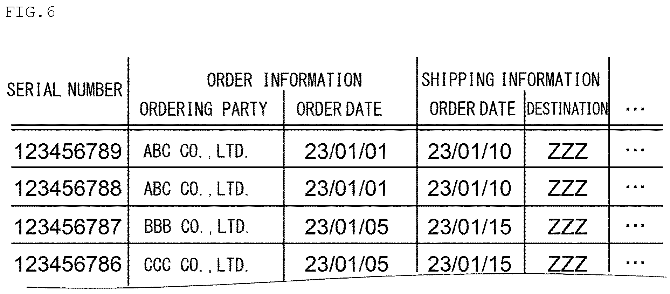

The distribution information recording unit 43 records various types of information in a distribution process or a sales process after the final product of the product 80 is shipped. FIG. 6 shows a data example recorded in the distribution information recording unit 43. For example, the information recorded in the distribution information recording unit 43 is, for example, order information, shipping information, price information, customer information, and the like, and is recorded in association with the serial number. In the example shown in the drawing, a serial number, order information (ordering party name, order date), and shipping information (shipment date, destination) are described.

As described above, by recording and updating the manufacturer, the supplier, the sales source, and the like in the product information DB 40 in each process of procurement, processing, assembly, distribution, and sales of the raw materials and the components, the history of the product 80 can be tracked even after the product 80 is manufactured or sold. Accordingly, it is possible to facilitate the cause investigation or the recovery work in a case where an unexpected problem occurs in the product 80. In addition, by disclosing certain information to the consumer, the consumer can select a product with high reliability, and anxiety such as display camouflage can be eliminated.

### <Product Information Control Unit 50>

The product information control unit 50 includes a registration unit 51, an information extraction unit 52, an encryption processing unit 53, and a verification processing unit 54.

The registration unit 51 registers and records various types of information in the product information DB 40 (the basic information recording unit 41, the manufacturing information recording unit 42, and the distribution information recording unit 43), and appropriately updates the various types of information.

In a case where there is a display request, a transmission request, or the like for the information recorded in the product information DB 40 from the operation of the operation unit 33, the reading device 10, or another external device, the information extraction unit 52 extracts the necessary information from the product information DB 40 in response to such a request. The extracted information is displayed on, for example, the display unit 32 or is transmitted to the reading device 10 or other devices in response to a request.

In a case where the code information transmitted from the reading device 10 is not decoded, the encryption processing unit 53 performs decoding processing. In addition, in a case where the encryption processing unit 53 performs encryption and decryption processing, such as blockchain, on data to be recorded in the product information DB 40, the encryption processing unit 53 performs encryption and decryption processing in accordance with the format.

The verification processing unit 54 authenticates the access of the person who uses the management device 30, or determines whether or not the information is appropriate based on the read information unit 90, in other words, determines the authenticity of the product 80. The authenticity determination processing of the product 80 may be performed using a two-dimensional code or the like. For example, the authenticity determination processing can be performed by providing a verification image instead of the two-dimensional code or the like in the information unit 90 with the invisible yarn 96 and sensing whether or not the verification image is correct and whether or not the verification image is present.

For the authenticity determination of whether or not the verification image is correct, for example, a genuine verification image (hereinafter, a reference verification image) is stored in advance in the product information DB 40, the verification processing unit 54 determines the degree of similarity between the captured image and the reference verification image, and in a case where the degree of similarity is equal to or higher than a certain level, the captured image is determined (verified) as the correct authentication image. A known method can be used as the determination method of the similarity, and for example, a method of evaluating a SIFT feature amount, a Hash value, histogram matching, a structural similarity (SSIM) index, or the like, or a technique of applying such a method to machine learning or artificial intelligence (AI) can be used.

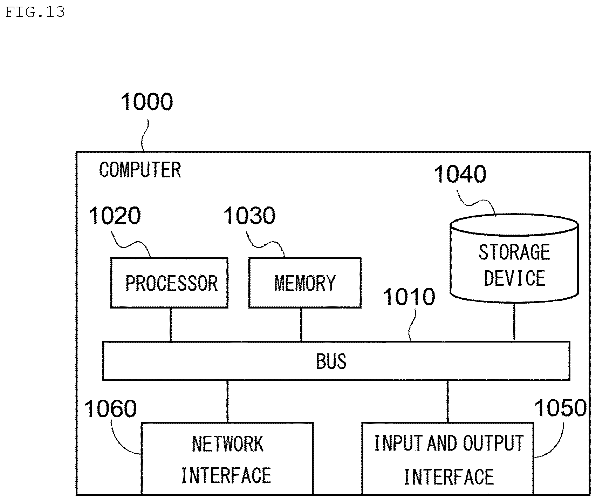

FIG. 13 is a diagram illustrating a hardware configuration of a computer 1000 for implementing the reading device 10 or the management device 30. The computer 1000 is various computers. For example, the computer 1000 is a personal computer (PC), a server machine, a tablet terminal, a smartphone, a terminal device, or the like. The computer 1000 may be a dedicated computer designed to implement the reading device 10 or the management device 30, or may be a general-purpose computer.

The computer 1000 includes a bus 1010, a processor 1020, a memory 1030, a storage device 1040, an input and output interface 1050, and a network interface 1060. The bus 1010 is a data transmission path for transmitting and receiving data between the processor 1020, the memory 1030, the storage device 1040, the input and output interface 1050, and the network interface 1060. The processor 1020 is an arithmetic processing device such as a central processing unit (CPU) or a graphics processing unit (GPU). The memory 1030 is a main storage device realized by a random access memory (RAM) or the like. The storage device 1040 is an auxiliary storage device realized by a hard disk, a solid state drive (SSD), a memory card, a read only memory (ROM), or the like. However, the storage device 1040 may be configured using a RAM or the like. The input and output interface 1050 is an interface for connecting the computer 1000 to input and output devices. For example, an input device such as a keyboard or a mouse and an output device such as a display device are connected to the input and output interface 1050. The network interface 1060 is an interface for connecting to a communication network such as a wide area network (WAN) or a local area network (LAN). The storage device 1040 stores a program module that realizes each function of the reading device 10 or the management device 30. The processor 1020 realizes each function corresponding to the program module by reading the program module into the memory 1030 and executing the program module.

### <Implementation Example of Reading Device 10 and Management Device 30>

Various devices may be employed as the specific computer 1000 for implementing the reading device 10 and the management device 30.

Specifically, for example, the computer 1000 is a server that functions as the management device 30 and is communicably connected to the reading device 10. The administrator of the management device 30 installs and operates an application for implementing the management device 30 on the server.

In addition, for example, the computer 1000 is a terminal device that functions as the reading device 10 and is communicably connected to the management device 30. In this case, the user of the reading device 10 installs an application that implements the function of the reading device 10 on the terminal device and operates the application.

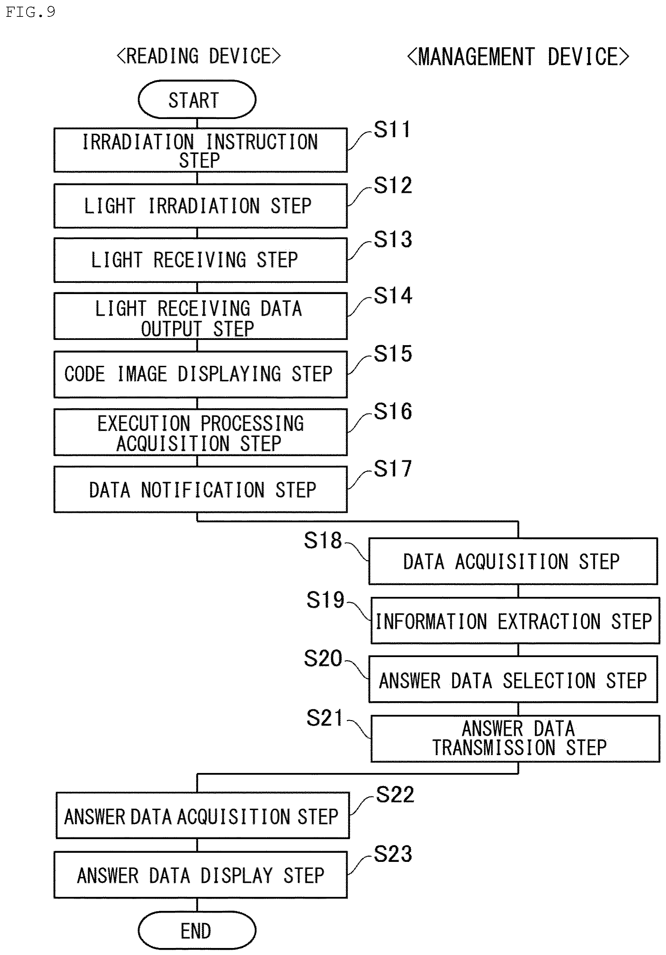

The processing by the product management system 1 (the reading device 10 and the management device 30) can be realized by using the reading device 10 and the management device 30 implemented by the computer 1000. A specific operation example of the product management system 1 (reading device 10 and management device 30) will be described later with reference to a flowchart of FIG. 9.

### <Information Unit 90>

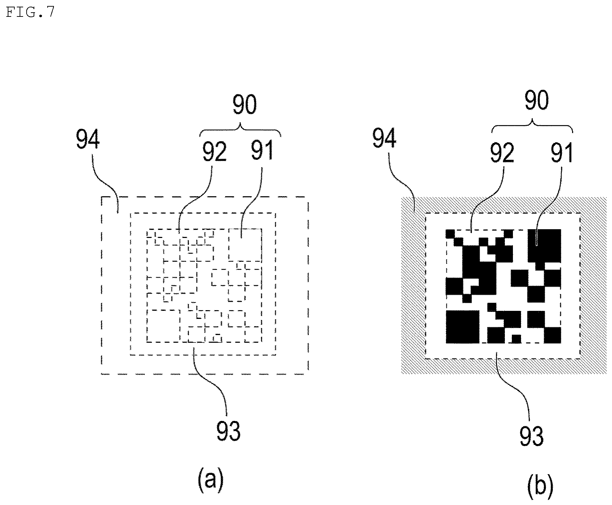

The configuration of the information unit 90 will be described with reference to FIGS. 7 and 8. FIG. 7 is a diagram showing the information unit 90 formed of the invisible yarn 96 and the periphery of the information unit 90 in an enlarged manner. FIG. 7(a) shows a state under normal visible light. FIG. 7(b) shows a state in which the reading device 10 has performed reading, that is, a state in which the IR irradiation unit 12 has irradiated the near-infrared light and the IR light receiving unit 13 has read the reflected light.

Here, an image of a two-dimensional code is exemplified as the code image of the information unit 90. The information unit 90 is directly provided on the fabric 94. Specifically, the information unit 90 includes an absorption part 91 and a reflection part 92. The code image is formed by the absorption part 91 and the reflection part 92. In addition, a margin 93 is provided on upper, lower, left, and right outer peripheral portions of the information unit 90 (that is, the code image created by the absorption part 91 and the reflection part 92). The difference in contrast between the absorption part 91 and the reflection part 92 in a case where the reading device 10 reads the information unit 90 is recognized as the code image.

The absorption part 91 is formed of an invisible yarn 96 containing a near-infrared absorbing material that absorbs near-infrared rays, and is a portion recognized as "black" in the image of the two-dimensional code. The absorption part 91 needs to not be visually recognized in a normal visual recognition environment. Therefore, the invisible yarn 96 constituting the absorption part 91 is configured to be integrated with the surroundings and not to be perceived as the code image in a normal visual recognition environment. For example, in a case where the color of the surroundings (that is, the reflection part 92 and the like) is blue, the color of the invisible yarn 96 of the absorption part 91 is also blue. In addition, in a case where a certain design is formed in the region where the absorption part 91 is provided under a normal visual recognition environment, the invisible yarn 96 is a color constituting the design.

In addition, it is also possible to form the design image on the upper part of the normal yarn 97 with the normal yarn 97. The near-infrared absorbing material will be described later.

The reflection part 92 is formed of a normal yarn 97 that does not contain a near-infrared absorbing material, and is a portion that is recognized as "white" in the image of the two-dimensional code. Here, the expression "not containing a near-infrared absorbing material" means that not only a material that absorbs only near-infrared ray but also a material that absorbs both near-infrared light and light other than near-infrared light, such as carbon, is not contained. In any case, the reflection part 92 is recognized as "white" in a case where the light reflected by the reflection part 92 is received by the IR light receiving unit 13.

The margin 93 is also referred to as a quiet zone, and is a region having a predetermined width that is recognized as "white", similarly to the reflection part 92. The presence of the margin 93 makes it possible to appropriately determine the start/end position of the code image, and in general, the margin 93 is determined according to the standard of the code image.

The code image of the information unit 90 may be formed by embroidering the invisible yarn 96 at the position of the absorption part 91, or may be formed as a design of the code image on one fabric (woven fabric, knitted fabric, or the like, a textile product) using the invisible yarn 96 and the normal yarn 97. In recent years, a weaving machine controlled by a computer can freely weave a fabric in a desired design. By using such a technique, an image of a two-dimensional code can be formed using the invisible yarn 96 and the normal yarn 97.

FIG. 8 is a diagram showing a cross-sectional structure of the information unit 90. Here, three types of structural examples are shown.

FIG. 8(a) shows an example in which the invisible yarn 96 and the normal yarn 97 (non-IR yarn color system) are provided on the surface side of the base fabric 95 in a one-layer structure in the thickness direction. The base fabric 95 is, for example, a white fabric or a fabric that reduces transmission of near-infrared rays. The invisible yarn 96 and the normal yarn 97 are set to be the same color, and thus the code image of the information unit 90 cannot be discriminated by the naked eye. In the drawing, since the invisible yarn 96 constituting the absorption part 91 is exposed on the surface, the information unit 90 can be accurately recognized in a case where the information unit 90 is sensed with near-infrared rays.

In a case where the invisible yarn 96 is provided by embroidery, the base fabric 95 is required, but in a case where the invisible yarn 96 is provided as a woven fabric or a knitted fabric, the base fabric 95 is not essential, and the image of the two-dimensional code can be formed only by the invisible yarn 96 and the normal yarn 97.

The optimization of the code image is achieved by adjusting the thickness and the width of the layer formed of the invisible yarn 96 and the normal yarn 97, and the amount and the concentration of the coloring agent that develops the color of the near-infrared absorbing material and the colorant in the visual recognition environment, which are contained in the invisible yarn 96. In addition, with such adjustment, it is possible to select whether the information unit 90 is of a type that acquires light reflected by the information unit 90 in a case of acquiring the code image or a type that acquires transmitted light. In other words, the type of the reading device 10 to be used is determined by the type of the information unit 90, that is, whether the reading device 10 is a type that receives reflected light or a type that receives transmitted light. In a case where the invisible yarn 96 or the normal yarn 97 is made of a multifilament (twisted yarn), it is assumed that the transmittance may decrease or light shielding may occur for visible light and invisible light due to the structure of the multifilament (a structure in which a plurality of untwisted yarns are twisted). Therefore, in a case of adjusting the coloring agent or the near-infrared absorbing material as the invisible yarn 96 or the normal yarn 97, consideration is given to what kind of yarn (twisting method, type of fiber, and the like) is used.

FIG. 8(b) shows an example of a structure in which a layer formed of a normal yarn 97 overlaps the absorption part 91 formed of an invisible yarn 96 on the surface side of the base fabric 95. That is, the information unit 90 formed of the invisible yarn 96 and the normal yarn 97 is provided on the base fabric 95 as a first layer 97a. Further, a second layer 97b formed of the normal yarn 97 is formed thereon. In a case where the invisible yarn 96 is exposed on the surface, the presence of the information unit 90 may be grasped by the degree of light, tactile sensation, or the like. Therefore, by providing a layer of the normal yarn 97 on the information unit 90 (that is, the absorption part 91 of the invisible yarn 96), such a concern can be avoided. The thickness of the layer of the normal yarn 97 provided on the absorption part 91 is adjusted according to the characteristics of the invisible yarn 96 and the normal yarn 97.

FIG. 8(c) shows a configuration in which a cover layer 98 is further provided on the second layer 97b of the normal yarn 97 having the configuration shown in FIG. 8(b). The cover layer 98 is formed of a material and a thickness that do not affect the recognition of the information unit 90. That is, a material having a high transmittance of near-infrared light and visible light may be used, and a textile fabric or a film member may be used.

As described above, by forming the information unit 90 (the absorption part 91 and the reflection part 92) with the invisible yarn 96 and the normal yarn 97, a code image that cannot be visually recognized in a normal visual recognition environment and can be read by irradiating with near-infrared light can be provided on the textile product. Since the code information (that is, the absorption part 91) is formed by the invisible yarn 96, the code image is substantially unlikely to disappear as compared with a case of being formed by printing. In particular, the near-infrared absorbing material may be easily decomposed in a case of being exposed to the atmosphere, but since the near-infrared absorbing material is kneaded into the raw yarn, the near-infrared absorbing material is resistant to be decomposed, and the code image can be used for a long period of time. That is, in the related art, even in a state in which the function of the traceability of the product 80 is substantially lost, in the present embodiment, the deterioration of the function of the traceability can be suppressed.

### <Invisible yarn 96>

The invisible yarn 96 may be a multifilament consisting of a plurality of long fibers or a monofilament consisting of one long fiber. From the viewpoint of near-infrared absorption characteristics (that is, high absorption characteristics), a multifilament (twisted yarn) is preferable. The thickness of the invisible yarn 96 is not limited and is appropriately selected according to the weaving method of the fabric of the product 80 itself and the coarseness of the fabric. For the fiber cross section of the invisible yarn 96, for example, a circular shape, a non-circular shape, or a hollow shape can be adopted. However, the specifications of the invisible yarn 96 are selected depending on the fineness of the code image included in the information unit 90, that is, the size of the dot.

The invisible yarn 96 is obtained by incorporating a near-infrared absorbing coloring agent into the resin yarn. In this case, as described above, various coloring agents for obtaining the color recognized in the normal visual recognition environment are contained as necessary.

For the resin yarn, a resin serving as the raw yarn need only be transparent and capable of containing a coloring agent. Specifically, a resin such as a polyester resin, a nylon resin, an acrylic resin, or a polycarbonate resin can be used. In particular, polyethylene terephthalate (PET) has a low raw material price, excellent heat resistance and strength, and is light and has excellent dyeability. It is also possible to change the shape of the yarn during production or to incorporate another material to impart special properties, and the yarn is suitably selected.

From the viewpoint of containing the near-infrared absorbing material and the coloring agent in the resin, the resin and near-infrared absorbing coloring agent may be melted or appropriately micronised and dispersed in a finely divided form without being subjected to thermal decomposition at the melting temperature of the resin. As a result, various combinations of materials, colors, thicknesses, and the like can be realized as the invisible yarn 96. In other words, by using the invisible yarn 96, it is possible to substantially eliminate the influence on the material and designability of the textile product.

The near-infrared absorbing material is not particularly limited to an organic material or an inorganic material.

As the organic material, a cyanine-based compound, a phthalocyanine-based compound, a naphthalocyanine-based compound, an anthraquinone-based compound, a dithiol metal complex, an aminium, an immonium compound, an azo-based compound, or the like can be used.

As the inorganic material, lanthanum hexaboride(LaB₆) and Cs-doped tungsten oxide (CWO, registered trademark) may be used alone or in an appropriate mixture with indium tin oxide (ITO) or antimony-doped tin oxide(ATO), which are conventional materials, or an organic material.

In the present specification, for example, the term "naphthalocyanine-based compound" means a general term for a metal naphthalocyanine compound having a substituent, a nonmetal naphthalocyanine compound having a substituent, a metal naphthalocyanine compound not having a substituent, and a nonmetal naphthalocyanine compound not having a substituent.

These compounds exhibit performance of favorably absorbing near-infrared light. Specifically, the light absorbing agent has maximum light absorption characteristics (maximum absorption wavelength) in a range of 700 nm to 1300 nm in the light absorption distribution. More specifically, the material is a material that satisfies the above-described physical properties and can favorably absorb near-infrared light, for example, at wavelengths of 780 nm, 830 nm, 850 nm, 1100 nm, and 1300 nm, output from an infrared camera or an infrared sensor (for example, a semiconductor laser), and has low light absorption characteristics in a visible light region (for example, 400 nm to 700 nm). Therefore, in the invisible yarn 96 including the near-infrared absorbing material composed of these compounds, the invisible yarn 96 is not visible to the naked eye in an environment under normal visible light.

Specifically, the following materials (coloring agents) can be suitably used.

Coloring agent DY1202 (manufactured by Yamamoto Chemicals Inc.): maximum absorption wavelength: approximately 780 nm

Coloring agent DY1205 (manufactured by Yamamoto Chemicals Inc.): maximum absorption wavelength: approximately 830 nm

Coloring agent DY2001 (manufactured by Yamamoto Chemicals Inc.): maximum absorption wavelength: approximately 850 nm

Coloring agent DY1204 (manufactured by Yamamoto Chemicals Inc.): maximum absorption wavelength: approximately 1100 nm

The maximum absorption wavelength (peak wavelength λ) can be adjusted by appropriately adjusting the components and the like of the material constituting the coloring agent. The light absorbance at the maximum absorption wavelength (peak wavelength λ) is preferably equal to or more than 50%. The light absorbance at the peak wavelength λ is preferably equal to or more than 60% and more preferably equal to or more than 80%. The light absorbance is appropriately determined depending on the performance of the reading device 10. In addition, the light absorbance in a range of a wavelength width of 300 nm (that is, a range of λ ± 150 nm) centered on the peak wavelength λ is preferably equal to or more than 50% (half-width). The half-width is preferably equal to or less than 100 nm and more preferably equal to or less than 50 nm. As a result, the sensing accuracy of the information unit 90 (that is, the code image) is improved. The half-width is also appropriately determined depending on the performance of the reading device 10.

In particular, a phthalocyanine-based compound and a naphthalocyanine-based compound are suitable since they have more preferable performance as the near-infrared absorbing performance and it is easy to adjust the concentration of the black value during sensing by the content.

Among the phthalocyanine-based compound and the naphthalocyanine-based compound, the pigment-based compound has good performance from the viewpoint of weather fastness (durability). That is, the performance of maintaining the function of the invisible yarn 96 including the near-infrared absorbing material is high.

Furthermore, in consideration of the image durability of the coloring agent, a naphthalocyanine-based compound is preferable. This is because the π-conjugated system is expanded compared to the phthalocyanine-based compound, so that the structure is so-called rigid and the weather fastness is excellent.

In order to shift the absorption band of the phthalocyanine-based compound and the naphthalocyanine-based compound to a desired near-infrared region, it is necessary to make adjustments such as introducing a substituent or changing a metal.

The vanadyl naphthalocyanine compound and the copper naphthalocyanine compound are more preferably a vanadyl naphthalocyanine compound which may have, as a substituent, any one or more of a nitro group, a substituted or unsubstituted alkyl group, a substituted or unsubstituted aryl group, or a substituted or unsubstituted alkylamino group, and a copper naphthalocyanine compound which may have, as a substituent, any one or more of a nitro group, a substituted or unsubstituted alkyl group, a substituted or unsubstituted aryl group, or a substituted or unsubstituted alkylamino group, and more specifically, a vanadyl naphthalocyanine compound which may have, as a substituent, any one or more of a nitro group, a substituted or unsubstituted alkyl group, a substituted or unsubstituted aryl group, or a substituted or unsubstituted alkylamino group.

In a case where the organic near-infrared absorbing material is exposed to the atmosphere, ultraviolet rays, or the like, the performance thereof deteriorates, but in a case where the deterioration rate is slow, the organic near-infrared absorbing material can function as the material of the invisible yarn 96 without particularly taking measures against deterioration.

In a case of producing the invisible yarn 96, the near-infrared absorbing material may be dispersed, melt-dispersed, or dissolved in a resin or the like by being formed into fine particles having an average particle diameter equal to or less than 0.5 microns, preferably equal to or less than 0.3 microns, more preferably equal to or less than 0.2 microns, and particularly preferably equal to or less than 0.1 microns, in consideration of the solubility of the near-infrared absorbing material in the resin or the like. In this case, the smaller the particle diameter, the better the dispersibility and solubility, and the better the invisible ink.

The method of micronising the near-infrared absorbing material is not particularly limited, and may be either a dry method or a wet method. However, a method such as a sand milling method, a ball milling method, or a spike milling method is adopted. In a case of mixing, an additive that assists in micronisation or stabilization may be added as necessary.

The numerical range of the content of the near-infrared absorbing material varies depending on the characteristics of the near-infrared absorbing material. However, in a case where the content is not sufficient regardless of the type of the content of the near-infrared absorbing material, the absorption of near-infrared light is not sufficient.

The other components are not particularly limited as long as they are generally contained in the yarn, and can be appropriately selected according to the purpose. Examples thereof include a mold release agent, a charge control agent, and an additive.

### <Operation of Product Management System 1>

The operation of the product management system 1 having the above configuration will be described with reference to the flowchart of FIG. 9.

In a case where the user operates the reading device 10 to issue an irradiation instruction of near-infrared light (S11: irradiation instruction step), the near-infrared light is output from the IR irradiation unit 12 (S12: light irradiation step). That is, the product 80 is irradiated with the near-infrared light toward the information unit 90.

The IR light receiving unit 13 acquires the reflected light of the near-infrared light from the information unit 90 (S13: light receiving step), sets the light level with which the absorption part 91 is irradiated to "LOW" and the light level with which the other regions (the reflection part 92 and the margin 93) are irradiated to "High", and outputs the light level to the terminal data processing unit 15 (S14: light receiving data output step). That is, the code image of the information unit 90 is output as black-and-white image data. In addition, the terminal data processing unit 15 displays the acquired code image on the display unit 16 (S15: code image displaying step).

Subsequently, the reading device 10 acquires an instruction from the user regarding the content of the processing to be executed (S16: execution processing acquisition step). The processing to be executed may be predetermined and may be automatically executed. Here, the content of the processing to be executed will be described as the display processing of the "product name" and the "raw material".

In a case where the processing to be executed is determined, the terminal data processing unit 15 transmits the acquired data of the code image and the processing to be executed to the management device 30 (S17: data notification step). In a case where the code image is decoded by the reading device 10, the decoding result is transmitted instead of the code image. In addition, in a case where the processing to be executed is completed only by the reading device 10, predetermined processing is executed in the reading device 10, and for example, an execution result is displayed on the display unit 16.

In the management device 30, in a case where the data is acquired from the reading device 10 (S18: data acquisition step), the encryption processing unit 53 decodes the code image from the reading device 10 and extracts the information superimposed on the code image (S19: information extraction step). For example, in a case where the information superimposed on the code image is the serial number of the product 80, the serial number is extracted. In addition, in this case, the verification processing (verification processing step) of the code image or the superimposed information may be performed. In the verification processing, a code image (barcode or the like) may be used, or a verification image prepared separately from the code image as described above may be used.

Subsequently, the information extraction unit 52 extracts data corresponding to the processing to be executed received from the reading device 10 from the product information DB 40 using the serial number obtained from the code image as a key (S20: answer data selection step), and transmits the data to the reading device 10 together with the serial number (S21: answer data transmission step). Here, since the "product name" and the "raw material" are requested from the reading device 10, the "product name" is extracted from the basic information recording unit 41 and the "raw material" is extracted from the manufacturing information recording unit 42 using the serial number as a key.

In the reading device 10, in a case where the answer data is acquired from the management device 30 (S22: answer data acquisition step), the terminal data processing unit 15 displays the answer data (here, the serial number, the "product name", and the "raw material") on the display unit 16 (S23: answer data display step). In a case where other processing is continuously executed, the reading device 10 notifies the management device 30 of the execution instruction in response to the operation of the user. Here, although the display processing of the data recorded in the product information DB 40 has been exemplified, for example, in the processing of the distribution stage, it is possible to perform the update processing of the stock number or the warehouse in which the product is stocked according to the shipment status. In addition, in a case of processing in the retail stage, sales management or customer information management processing of associating a product with a customer can be performed.

In the above-described processing, the reading of the information unit 90 is performed in one direction (front surface or back surface), but may be performed on both the front surface and the back surface.

That is, the light irradiation step includes a first light irradiation step of irradiating the surface of the information unit 90 with light (A) and a second light irradiation step of irradiating the back surface of the information unit 90 with light (A). The light receiving step includes a first light receiving step of receiving the light (A) in the first light irradiation step and a second light receiving step of receiving the light (A) in the second light irradiation step. The information extraction step includes a first information extraction step of extracting first information from the information unit based on the light (A) obtained in the first light receiving step, and a second information extraction step of extracting second information from the information unit 90 based on the light (A) obtained in the second light receiving step. In the verification step, the verification is performed in a case where the first information and the second information are correct.

For example, in a case where the information unit 90 is camouflaged on the front surface by printing, the information unit 90 can be correctly recognized in a case where the front surface is read, but the information unit 90 may not be correctly read in a case where the back surface is read. Therefore, by reading both surfaces, it is possible to prevent such camouflage.

### <Summary of Features of Present Embodiment>

The features of the present embodiment will be summarized and described below.
1. A textile product (product 80, product body 81, tag 80b, 80c) including an information unit 90 that is provided in a predetermined shape on a textile fabric provided with a yarn (normal yarn) that does not absorb light having a specific wavelength λ other than a visible light region, using a functional yarn (invisible yarn) that absorbs light having the specific wavelength λ as a peak wavelength.
   The fiber cross section of the functional yarn is not limited to a circular shape, a special shape, a hollow shape, or the like.
2. The textile product (product 80, product body 81, tag 80b, 80c) according to 1., in which the specific wavelength λ is in a wavelength range of infrared light.
3. The textile product (product 80, product body 81, tag 80b, 80c) according to 1., in which the specific wavelength λ is in a range of 700 to 1300 nm.
4. The textile product (product 80, product body 81, tag 80b, 80c) according to any one of 1. to 3., in which a light absorbance at the specific wavelength λ is equal to or more than 50%. The light absorbance is preferably equal to or more than 60% and more preferably equal to or more than 80%. The light absorbance is appropriately determined depending on the performance of the reading device 10.
5. The textile product (product 80, product body 81, tag 80b, 80c) according to 4., in which a light absorbance in a wavelength range of a wavelength width of 300 nm centered on the specific wavelength λ is equal to or more than 50%. The half-width is preferably equal to or less than 100 nm and more preferably equal to or less than 50 nm.
6. The textile product (product 80, product body 81, tag 80b, 80c) according to any one of 1. to 5., in which the functional yarn is formed by incorporating a light absorbing material that absorbs the specific wavelength λ into a raw yarn.
7. The textile product (product 80, product body 81, tag 80b, 80c) according to 6., in which the raw yarn is a resin yarn having a resin as a main raw material.
8. The textile product (product 80, product body 81, tag 80b, 80c) according to 7., in which the main raw material of the resin yarn is polyethylene terephthalate, nylon, acrylic, or polycarbonate.
9. The textile product (product 80, product body 81, tag 80b, 80c) according to any one of 1. to 8., in which the functional yarn is a monofilament yarn or a multifilament yarn obtained by twisting a plurality of fibers together.
10. The textile product (product 80, product body 81, tag 80b, 80c) according to any one of 1. to 9., in which the information unit 90 is formed by embroidering the functional yarn on the textile fabric.
   In the case of the woven fabric and the knitted fabric, the base fabric 95 is not essential, and the image of the two-dimensional code can be formed only with the invisible yarn 96 and the normal yarn 97.
11. The textile product (product 80, product body 81, tag 80b, 80c) according to any one of 1. to 9., in which the information unit 90 is formed by weaving or knitting the functional yarn and the yarn that does not absorb light having the specific wavelength λ together.
12. The textile product (product 80, product body 81, tag 80b, 80c) according to any one of 1. to 11., in which in the information unit 90, the functional yarn and the yarn that does not absorb light having the specific wavelength λ have the same color or similar colors in a visible light region.
13. The textile product (product 80, product body 81, tag 80b, 80c)according to any one of 1. to 12., in which in the information unit 90, a cover layer that transmits light having the specific wavelength λ is provided on an upper surface of the functional yarn.
14. The textile product (product 80, product body 81, tag 80b, 80c) according to 13., in which the cover layer is formed of a fiber member.
15. The textile product (product 80, product body 81, tag 80b, 80c) according to 13., in which the cover layer is formed of a film member.
16. A functional yarn used for the textile product (product 80, product body 81, tag 80b, 80c) according to any one of 1. to 15..
17. A sensing method comprising: irradiating the textile product (product 80, product body 81, tag 80b, 80c) according to any one of 1. to 16. with light (A) having a specific wavelength λ, and sensing an information unit 90 formed in a predetermined shape using a yarn that absorbs the light having the specific wavelength λ in the textile product.

### Examples

Hereinafter, the present invention will be described in more detail with reference to Examples, but the present invention is not limited thereto.

A code image corresponding to a QR code and an authenticity determination image were created as the information unit 90 using the invisible yarn and the normal yarn, and the effectiveness of the information unit using the invisible yarn was confirmed.

### (Invisible yarn)

The invisible yarn was obtained by the following steps.

An infrared absorbing coloring agent (DY1205 (manufactured by Yamamoto Chemicals Inc.)) was added and mixed with the melted polyethylene terephthalate to a concentration of 0.30% by mass, and the infrared absorbing coloring agent was melt-dispersed in the polyethylene terephthalate. The obtained spinning solution was red and transparent. This spinning solution was discharged from a spinning die having a spinning temperature of 280°C to 285°C and a hole diameter of 0.8 mmφ × 18 holes, and was taken up at a spinning speed of 120 m/min to obtain an un-stretched yarn (resin fiber). Further, using a hot roll-heat plate type stretching machine, the yarn was stretched at a stretching ratio of 5.0 times to obtain a stretched yarn (filament yarn) of 72 filaments, which was wound around a spool. The manufactured filament yarn had a circular cross-sectional shape in a direction orthogonal to the fiber axis direction and a fiber diameter of 0.104 mm.

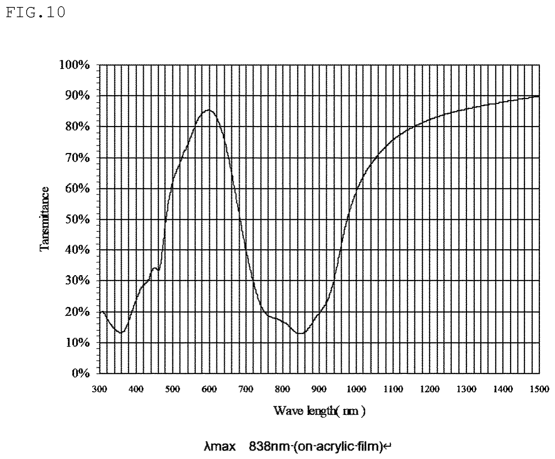

FIG. 10 shows a spectral distribution of the light absorption characteristics of the infrared absorbing coloring agent (DY1205). The maximum absorption wavelength was 838 nm.

### (Normal yarn)

A filament yarn was obtained in the same manner as described above except that the infrared absorbing coloring agent was not added to the normal yarn.

### (Sample fabric)

A fabric having an information unit (code image) was created by bagging with the obtained invisible yarn and the normal yarn. In addition, the information unit (authenticity determination image) was created by embroidering and sewing the invisible yarn.

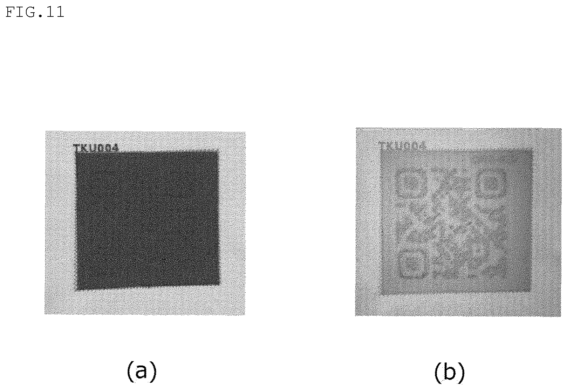

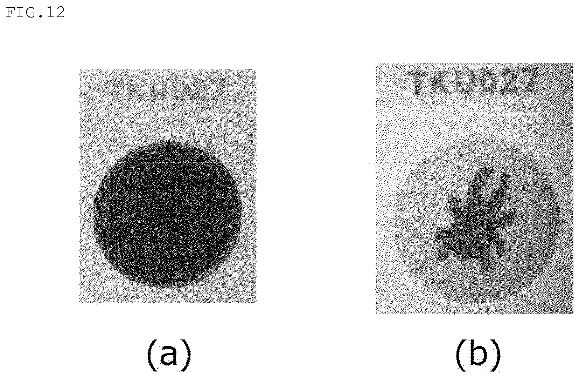

FIGS. 11 and 12 show photographs taken in the examples. FIG. 11 is a photograph of a sample in which a code image is generated as the information unit. FIG. 11(a) is a photograph captured in a normal environment. FIG. 11(b) is a photograph scanned with an infrared camera or an infrared sensor. FIG. 12 is a photograph of a sample in which the authenticity determination image is generated as the information unit. FIG. 12(a) is a photograph taken in a normal environment. FIG. 12(b) is a photograph scanned with an infrared camera or an infrared sensor. In both the code image and the authenticity determination image, it was difficult to visually recognize the information unit (code image) in a normal environment (that is, under visible light). On the other hand, in a case where the code image and the authenticity determination image were scanned with a night vision camera of an infrared sensor (manufactured by Japan CDR Co., Ltd., small high-magnification video microscope "CD4000") and a smartphone (OUKITEL WP16 manufactured by OUKITEL), the code image and the authenticity determination image could be clearly recognized.

This application claims priority based on Japanese Patent Application No. 2023-012962 filed on January 31, 2023, the entire disclosure of which is incorporated herein by reference.

### REFERENCE SIGNS LIST

1 product management system
10 reading device
12 IR irradiation unit
13 IR light receiving unit
15 terminal data processing unit
40 product information DB
50 product information control unit
51 registration unit
52 information extraction unit
53 encryption processing unit
54 encryption processing unit
80 product
80b, 80c tag
81 product body
90 information unit
91 absorption part
92 reflection part
93 margin

## Claims

1. A textile product comprising:
an information unit that is provided in a predetermined shape on a textile fabric provided with a yarn that does not absorb light having a specific wavelength λ other than a visible light region, using a functional yarn that absorbs light having the specific wavelength λ as a peak wavelength.

2. The textile product according to Claim 1,
wherein the specific wavelength λ is in a wavelength range of infrared light.

3. The textile product according to Claim 1,
wherein the specific wavelength λ is in a range of 700 to 1300 nm.

4. The textile product according to any one of Claims 1 to 3,
wherein a light absorbance at the specific wavelength λ is equal to or more than 50%.

5. The textile product according to Claim 4,
wherein a light absorbance in a wavelength range of a wavelength width of 300 nm centered on the specific wavelength λ is equal to or more than 50%.

6. The textile product according to any one of Claims 1 to 3,
wherein the functional yarn is formed by incorporating a light absorbing material that absorbs the specific wavelength λ into a raw yarn.

7. The textile product according to Claim 6,
wherein the raw yarn is a resin yarn having a resin as a main raw material.

8. The textile product according to Claim 7,
wherein the main raw material of the resin yarn is polyethylene terephthalate, nylon, acrylic, or polycarbonate.

9. The textile product according to any one of Claims 1 to 3,
wherein the functional yarn is a monofilament yarn or a multifilament yarn obtained by twisting a plurality of fibers together.

10. The textile product according to any one of Claims 1 to 3,
wherein the information unit is formed by embroidering the functional yarn on the textile fabric.

11. The textile product according to any one of Claims 1 to 3,
wherein the information unit is formed by weaving or knitting the functional yarn and the yarn that does not absorb light having the specific wavelength λ together.

12. The textile product according to any one of Claims 1 to 3,
wherein in the information unit, the functional yarn and the yarn that does not absorb light having the specific wavelength λ have the same color or similar colors in a visible light region.

13. The textile product according to any one of Claims 1 to 3,
wherein in the information unit, a cover layer that transmits light having the specific wavelength λ is provided on an upper surface of the functional yarn.

14. The textile product according to Claim 13,
wherein the cover layer is formed of a fiber member.

15. The textile product according to Claim 13,
wherein the cover layer is formed of a film member.

16. A functional yarn used for the textile product according to any one of Claims 1 to 3.

17. A sensing method comprising:
irradiating the textile product according to any one of Claims 1 to 3 with light (A) having a specific wavelength λ, and sensing an information unit formed in a predetermined shape using a yarn that absorbs the light having the specific wavelength λ in the textile product.
